# DEMANDE DE BREVET EUROPEEN

(11) **EP 2 904 929 A1**
(43) Date de publication de la demande: **12.08.2015**
(21) Numéro de dépôt: 15154245.3
(22) Date de dépôt: 07.02.2015
(51) Int. Cl.: A45D 34/04

(54) **Système de distribution d'un produit fluide conditionné dans un flacon**

(30) Priorité: 07.02.2014 FR 1400364
(71) Demandeur: Albéa le Tréport, 76470 Le Tréport (FR)
(72) Inventeur: Imenez, Hervé, 80210 Feuquières en vimeu (FR); Bloc, Richard, 76370 Derchigny-Graincourt (FR)
(74) Mandataire: Sayettat, Julien Christian

(57) **Abrégé**

L'invention concerne un système de distribution d'un produit fluide conditionné dans un flacon (1), ledit système comprenant un organe (2) de prélèvement ; une bague (7) solidaire du flacon (1) présentant deux bras supérieurs (8) disposés de part et d'autre du gicleur (3qui est équipé de deux ergots extérieurs (9), lesdits bras présentant chacun un ergot intérieur (10) disposé dans le prolongement axial d'un ergot extérieur (9) pour former entre eux un logement ; un support (13) présentant un conduit (14) de distribution, les bras (8) étant montés en translation dans ledit support ; un bouton poussoir (15) qui est monté en translation radiale par rapport au support (13) et qui présente deux pattes (17) présentant chacune une portée supérieure (17a) en appui sur un ergot intérieur (10) et une portée inférieure (17b) en appui sur un ergot extérieur (9), lesdites portées étant divergentes radialement pour qu'un enfoncement du bouton poussoir (15) induise un écartement des ergots (9, 10) pour actionner l'organe (2) par enfoncement du gicleur (3) et soulèvement du flacon (1); un applicateur (31) étant monté en rotation relative sur le support (13).

## Description

L'invention concerne un système de distribution d'un produit fluide conditionné dans un flacon, ainsi qu'un procédé d'assemblage d'un tel système.

Dans une application particulière, le produit est de type gel ou crème, par exemple pour une utilisation en cosmétique ou pour des traitements pharmaceREXA-B10utiques. Plus particulièrement, l'invention peut permettre l'application d'un produit tel qu'un rouge à lèvres liquide (lip gloss en anglais) ou un produit de soin pour les lèvres.

On connaît des systèmes de distribution comprenant un organe de prélèvement d'un produit conditionné dans un flacon, par exemple formé d'une pompe, qui présente un corps solidaire dudit flacon pour être alimenté en produit et un gicleur surmontant ledit corps. En particulier, l'organe de prélèvement est actionnable par déplacement réversible du gicleur sur une course axiale respectivement descendante de distribution et ascendante d'aspiration du produit.

Classiquement, le déplacement du gicleur est actionné par un bouton poussoir qui est monté sur l'extrémité supérieure du gicleur, ledit bouton poussoir présentant un orifice de distribution en communication avec ledit gicleur et une zone supérieure d'appui axial.

Le document WO-2013/011246 propose un système de distribution comprenant :
- une bague solidaire du flacon et dans laquelle le corps de l'organe de prélèvement est fixé de façon étanche, ladite bague présentant deux bras supérieurs disposés de part et d'autre du gicleur qui est équipé de deux ergots extérieurs, lesdits bras présentant chacun un ergot intérieur disposé dans le prolongement axial d'un ergot extérieur pour former entre eux un logement ;
- un support présentant un conduit de distribution du produit, les bras étant montés en translation dans ledit support en mettant le gicleur en communication avec le conduit de distribution ;
- un bouton poussoir d'actionnement de l'organe de prélèvement qui est monté en translation radiale par rapport au support, ledit bouton poussoir présentant deux pattes disposées respectivement dans un logement formé entre les ergots, lesdites pattes présentant chacune une portée supérieure en appui sur un ergot intérieur et une portée inférieure en appui sur un ergot extérieur, lesdites portées étant divergentes radialement pour qu'un enfoncement du bouton poussoir induise un écartement des ergots pour actionner l'organe de prélèvement par enfoncement du gicleur et soulèvement du flacon.

En particulier, dans ce système de distribution, la course et l'effort d'actionnement en translation du bouton poussoir sont réduits grâce à une combinaison d'un enfoncement du gicleur avec un soulèvement du flacon pour réaliser l'actionnement de l'organe de prélèvement. Par ailleurs, ce système peut utiliser un organe de prélèvement standard, c'est-à-dire du type utilisable pour un actionnement axial.

En outre, un tel système peut comprendre un applicateur qui est monté sur le support, ledit applicateur comprenant un orifice qui est en communication avec le conduit de distribution pour distribuer le produit.

Ainsi, pour pouvoir appliquer du produit sur une partie de son corps, par exemple sur ses lèvres, une utilisatrice peut appuyer sur le bouton poussoir pour distribuer du produit, puis presser et déplacer l'applicateur le long de ladite partie pour étaler ledit produit sur ladite partie, ce qui constitue une gestuelle particulièrement intuitive.

Toutefois, pour pouvoir bénéficier d'une gestuelle encore plus intuitive et facilement adaptable aux habitudes propres à l'utilisatrice et/ou à la position de la partie du corps sur laquelle elle souhaite appliquer du produit, il peut être avantageux de pouvoir orienter sélectivement l'applicateur et plus particulièrement son orifice de distribution, notamment par rapport au bouton poussoir.

A cet effet, selon un premier aspect, l'invention propose un système de distribution d'un produit fluide conditionné dans un flacon, ledit système comprenant un organe de prélèvement du produit conditionné qui présente un corps solidaire du flacon pour être alimenté en produit et un gicleur surmontant ledit corps, ledit gicleur étant déplaçable réversiblement sur une course axiale respectivement descendante de distribution et ascendante d'aspiration du produit, ledit système comprenant :
- une bague solidaire du flacon et dans laquelle le corps de l'organe est fixé de façon étanche, ladite bague présentant deux bras supérieurs disposés de part et d'autre du gicleur qui est équipé de deux ergots extérieurs, lesdits bras présentant chacun un ergot intérieur disposé dans le prolongement axial d'un ergot extérieur pour former entre eux un logement ;
- un support présentant un conduit de distribution du produit, les bras étant montés en translation dans ledit support en mettant le gicleur en communication avec ledit conduit ;
- un bouton poussoir d'actionnement de l'organe de prélèvement qui est monté en translation radiale par rapport au support, ledit bouton poussoir présentant deux pattes disposées respectivement dans un logement formé entre les ergots, lesdites pattes présentant chacune une portée supérieure en appui sur un ergot intérieur et une portée inférieure en appui sur un ergot extérieur, lesdites portées étant divergentes radialement pour qu'un enfoncement du bouton poussoir induise un écartement des ergots pour actionner l'organe de prélèvement par enfoncement du gicleur et soulèvement du flacon ;
ledit système présentant un applicateur du produit qui est monté sur le support, ledit montage étant agencé pour permettre la rotation relative dudit applicateur par rapport audit support en mettant en communication étanche un orifice de distribution de l'applicateur avec le conduit de distribution.

Selon un deuxième aspect, l'invention propose un procédé d'assemblage d'un tel système de distribution, ledit procédé prévoyant de :
- monter le bouchon sur l'extrémité inférieure du flacon ;
- coulisser le flacon dans l'étui jusqu'à solidarisation du bouchon sur le fond de l'étui ;
- coulisser le flacon par rapport au bouchon pour monter ledit flacon sur l'organe de prélèvement, ledit coulissement étant réalisé sur une course agencée pour permettre la translation de l'extrémité inférieure dans ledit bouchon lors de l'actionnement de l'organe de prélèvement.

D'autres objets et avantages de l'invention apparaîtront dans la description qui suit, faite en référence aux figures annexées, dans lesquelles :

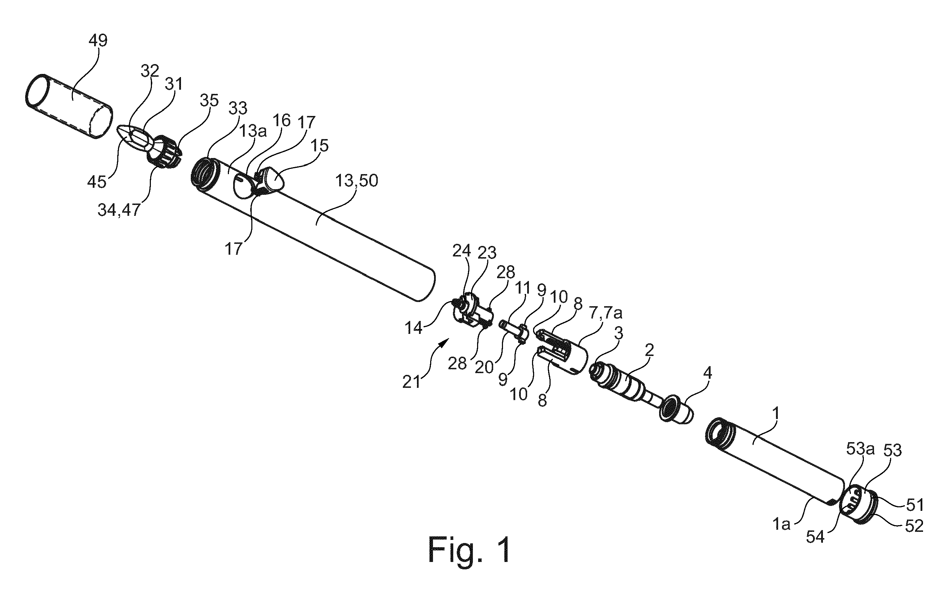

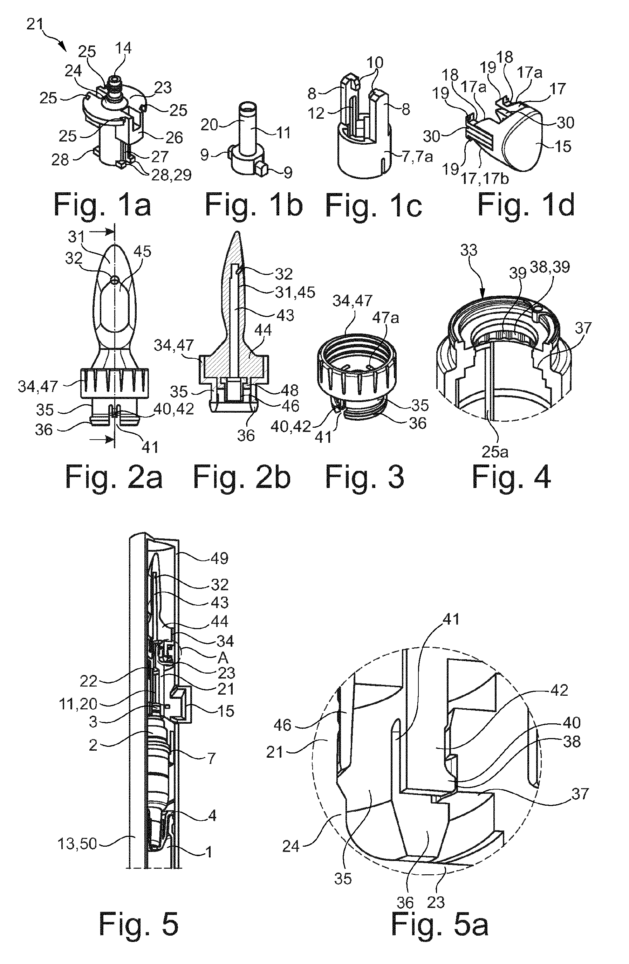

- la figure 1 est une vue en perspective éclatée d'un système de distribution selon un mode de réalisation de l'invention, les figures 1a-1d étant des vues agrandies respectivement de l'insert du support portant le conduit de distribution, de l'embout portant les ergots extérieurs, de la bague et du bouton poussoir ;
- les figures 2 représentent l'applicateur de la figure 1, respectivement en vue de face (figure 2a) et en coupe longitudinale (figure 2b) ;
- la figure 3 est une vue en perspective du socle de montage de l'applicateur des figures 1, 2 ;
- la figure 4 est une vue agrandie en coupe partielle de l'ouverture supérieure du support de la figure 1 ;
- la figure 5 est une vue agrandie en coupe partielle de la partie supérieure du système de distribution de la figure 1, la figure 5a étant un agrandissement de la zone A de la figure 4 ;
- les figures 6 représentent en coupe longitudinale le système de distribution de la figure 1 durant différentes étapes de son assemblage.

En relation avec les figures, on décrit un système de distribution d'un produit fluide conditionné dans un flacon 1, ledit produit pouvant être un gel ou une crème, par exemple pour un usage cosmétique ou pour des traitements pharmaceutiques.

Le système comprend un organe 2 de prélèvement du produit conditionné qui présente un corps solidaire du flacon 1 pour être alimenté en produit et un gicleur 3 surmontant ledit corps. En particulier, le flacon est associé sous le corps de l'organe 2 de prélèvement au moyen d'un raccord 4 agencé pour assurer l'étanchéité de ce montage.

Dans le mode de réalisation représenté, l'organe de prélèvement est une pompe 2 sans que l'invention ne soit limitée à une telle réalisation, ladite pompe pouvant être du type sans reprise d'air en étant alimentée en produit, à titre d'exemple, par l'action d'un piston racleur coulissant dans le flacon 1.

Pour permettre le prélèvement du produit, le gicleur 3 est déplaçable réversiblement sur une course axiale respectivement descendante de distribution et ascendante d'aspiration du produit. En particulier, le gicleur 3 peut comprendre un tube qui est disposé dans le corps de la pompe 2 en formant une chambre de dosage en communication avec le flacon 1 par l'intermédiaire d'un clapet, un ressort 5 étant prévu pour rappeler ledit gicleur sur sa course d'aspiration.

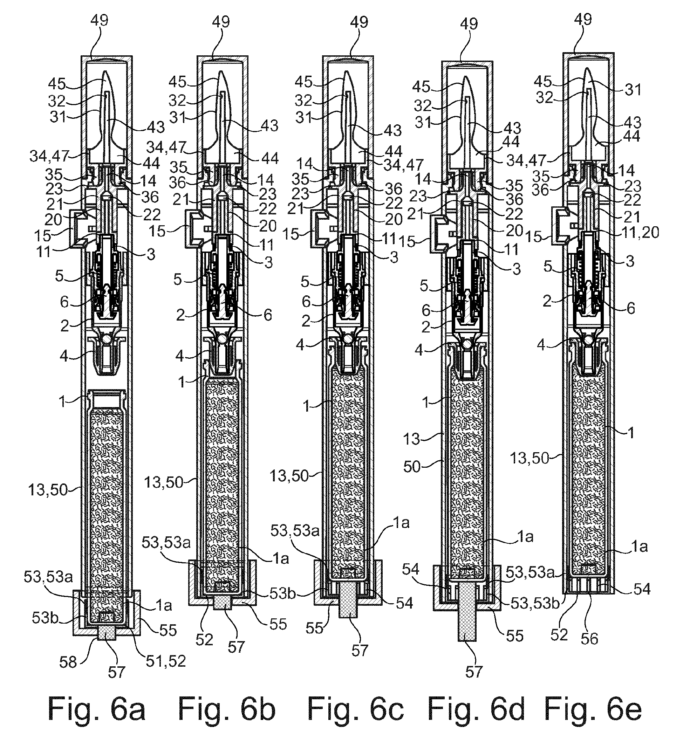

En relation avec les figures 6 sur lesquelles elle est coupée, la pompe 2 est du type de celle décrite dans le document FR-2 908 843, c'est-à-dire comprenant un pointeau 6 disposé dans le gicleur 3 pour ouvrir - respectivement fermer - la communication entre ledit gicleur et la chambre de dosage sur la course de distribution - respectivement d'aspiration. Toutefois, l'invention n'est pas limitée à une structure de pompe 2 particulière, notamment relativement aux moyens nécessaires pour le prélèvement sous pression du produit à distribuer.

Le système comprend une bague 7 solidaire du flacon 1 et dans laquelle le corps de la pompe 2 est fixé de façon étanche. Pour ce faire, la bague 7 présente une partie tubulaire 7a dans laquelle le corps de la pompe 2 est monté par emmanchement étanche.

La bague 7 présente deux bras supérieurs 8 qui sont disposés de part et d'autre du gicleur 3. En particulier, les bras 8 sont formés d'une pièce avec la partie tubulaire 7a en étant associés fixement sur son bord supérieur.

Dans les modes de réalisation représentés, le gicleur 3 est équipé d'un embout 11 rapporté sur lequel deux ergots extérieurs 9 sont formés. En particulier, l'embout 11 présente un alésage de montage sur le gicleur 3, les ergots 9 s'étendant radialement en étant diamétralement répartis autour dudit alésage. En variante non représentée, les ergots 9 peuvent être formés directement sur le gicleur 3.

Les bras 8 présentent chacun un ergot intérieur 10 qui est disposé au dessus et dans le prolongement axial d'un ergot extérieur 9 pour former entre eux un logement.

Par ailleurs, les ergots intérieurs 10 s'étendent radialement en étant formés au voisinage des extrémités supérieures des bras 8, chacun desdits bras présentant une gorge axiale 12 dans laquelle un ergot extérieur 9 est guidé en translation.

Le système comprend un support 13 qui présente un conduit 14 de distribution du produit, les bras 8 étant montés en translation dans ledit support en mettant le gicleur 3 en communication avec le conduit 14 de distribution.

Le système comprend un bouton poussoir 15 d'actionnement de l'organe 2 de prélèvement qui est monté en translation radiale par rapport au support 13. Pour ce faire, le support 13 comprend une paroi latérale 13a qui est pourvue d'une ouverture latérale 16 dans laquelle le bouton poussoir 15 est monté en translation. En outre, le bouton poussoir 15 peut être entouré d'un enjoliveur de masquage du bord de l'ouverture latérale 16.

Le bouton poussoir 15 présente deux pattes 17 disposées respectivement dans un logement formé entre les ergots 9, 10, lesdites pattes s'étendant radialement dans l'ouverture latérale 16 pour être disposées respectivement entre un bras 8 et l'embout 11, lesdites pattes entourant le gicleur 3. Les pattes 17 présentent chacune une portée supérieure 17a en appui sur un ergot intérieur 10 et une portée inférieure 17b en appui sur un ergot extérieur 9, lesdites portées étant divergentes radialement pour qu'un enfoncement du bouton poussoir 15 induise un écartement des ergots 9, 10.

Ainsi, l'actionnement de l'organe 2 de prélèvement est réalisé en combinant un enfoncement du gicleur 3 avec un soulèvement du flacon 1, ce qui permet de limiter la course et l'effort d'actionnement en translation du bouton poussoir 15. En outre, après relâchement du bouton poussoir 15, le rappel du gicleur 3 sur sa course d'aspiration actionne le retour en position de repos du bouton poussoir 15 et du flacon 1. Selon un exemple de réalisation, les portées 17a, 17b présentent une pente de 35° pour, sur une course inférieure à 3,5 mm, distribuer une dose de l'ordre de 120 µl.

Dans les modes de réalisation représentés, les pattes 17 présentent une face supérieure et une face inférieure, chacune desdites faces comprenant une empreinte 18 qui est bordée à l'avant par un rebord extérieur 19 et à l'arrière par une portée 17a, 17b. Ainsi, la position au repos du bouton poussoir 15 est définie en disposant un ergot 9, 10 dans respectivement une empreinte 18 qui présente une dimension sensiblement égale à celle dudit ergot.

Les rebords extérieurs 19 présentent une extrémité biseautée pour permettre la disposition des pattes 17 dans les logements formés entre les ergots 9, 10. En particulier, lors de cette disposition, les ergots 9, 10 sont écartés par mise en appui sur les rebords 19, ce qui induit un actionnement de la pompe 2 pouvant par exemple être utilisé pour la pré-amorcer.

Par ailleurs, les ergots 9, 10 interagissent avec un rebord extérieur 19 pour empêcher le retrait du bouton poussoir 15. Pour ce faire, les rebords extérieurs 19 présentent un pan arrière qui est droit pour empêcher le retrait des ergots 9, 10 après leur disposition dans les empreintes 18.

De façon avantageuse, l'embout 11 équipant le gicleur 3 présente une cheminée supérieure 20 qui est montée en translation dans le conduit 14 de distribution. En particulier, l'embout 11 comprend une partie supérieure dans laquelle la cheminée 20 est formée en étant en communication avec le gicleur 3.

En relation avec les figures, le support 13 comprend un insert 21 fixé à l'intérieur dudit support, ledit insert présentant le conduit 14 de distribution.

Cette réalisation permet de définir dans le conduit 14 de distribution une chambre tampon 22 pour le produit prélevé dont le volume est croissant - respectivement décroissant - sur la course de distribution - respectivement d'aspiration - du gicleur 3. En particulier, la chambre tampon 22 comprend une partie inférieure cylindrique dans laquelle la cheminée 20 est montée en translation et une partie supérieure conique qui converge vers le conduit 14 de distribution. La chambre tampon 22 peut présenter une variation de volume qui est comprise entre 30% et 100% de la dose de produit prélevé par la pompe 2.

Ainsi, il est possible d'obtenir une gestuelle dans laquelle la distribution est au moins en partie dissociée de l'application du produit. En effet, l'appui sur le bouton poussoir 15 induit le remplissage de la chambre tampon 22 avec au moins une partie de la dose prélevée et, après relâchement dudit bouton poussoir, la dose est distribuée par diminution du volume de ladite chambre tampon.

L'insert 21 présente un plateau supérieur 23 sur lequel s'étend un cône 24 traversé par le conduit 14 de distribution, ledit plateau présentant quatre encoches 25 réparties par couple de part et d'autre du cône 24, lesdites encoches étant engagées dans respectivement une cannelure axiale 25a formée à l'intérieur du support 13.

Les cannelures 25a permettent le montage droit de l'insert 21 par coulissement à l'intérieur du support 13 jusqu'à fixation du plateau 23 dans ledit support, notamment par encliquetage. En outre, l'insert 21 présente un pont 26 en U formé entre chacun des couples d'encoches 25 pour améliorer le guidage en coulissement de l'insert 21 dans le support 13, notamment en limitant le rotulage dudit insert avant encliquetage.

L'insert 21 présente également deux fentes axiales 27 formées respectivement sous un pont 26 en U, un ergot intérieur 10 étant guidé en translation dans respectivement une fente 27 lors de l'actionnement du système. En particulier, les bras 8 sont guidés en translation dans le support 13 entre deux cannelures 25a.

L'extrémité inférieure de chacun des bords des fentes 27 est équipée d'un ergot 28. En particulier, les deux ergots 28 d'une fente 27 forment une glissière radiale 29 pour permettre le guidage en translation du bouton poussoir 15. Pour ce faire, chaque patte 17 présente un évidement central 30 dans laquelle deux ergots 28 d'une fente 27 sont disposés.

Pour améliorer l'ergonomie de la distribution du produit, le système présente un applicateur 31 qui est monté sur le support 13, ledit montage étant agencé pour permettre la rotation relative dudit applicateur par rapport audit support en mettant en communication étanche un orifice 32 de distribution de l'applicateur 31 avec le conduit 14 de distribution.

Ainsi, pour pouvoir appliquer du produit sur une partie de son corps, par exemple sur ses lèvres, une utilisatrice peut orienter sélectivement l'applicateur et plus particulièrement son orifice 32, notamment en fonction de ses habitudes propres et/ou à la position de ladite partie du corps, puis appuyer sur le bouton poussoir 15 avant de presser et déplacer ledit applicateur le long de ladite partie pour y étaler le produit, ce qui constitue une gestuelle particulièrement intuitive.

En relation avec les figures, le support 13 comprend une ouverture supérieure 33 dans laquelle l'applicateur 31 est monté en rotation, ladite ouverture supérieure étant située au-dessus de l'ouverture latérale 16 de réception du bouton poussoir 15. De plus, l'axe de rotation de l'applicateur 31 est perpendiculaire à l'axe de translation du bouton poussoir 15.

L'applicateur 31 comprend un socle 34 de montage en rotation sur le support 13, ce socle 34 comprenant une jupe extérieure 35 portant un jonc annulaire 36 inférieur qui est encliqueté avec possibilité de rotation relative sous un rebord annulaire 37 du support 13.

En relation avec les figures, le socle 34 de montage est disposé dans l'ouverture supérieure 33 du support 13, ladite ouverture supérieure présentant un rebord annulaire 37 qui fait saillie à l'intérieur d'elle et sous laquelle le jonc annulaire 36 dudit socle est encliqueté avec possibilité de rotation relative.

Le support 13 comprend une rampe annulaire 38 axiale formée au-dessus du rebord d'encliquetage 37 et présentant des crans 39 répartis angulairement. Par ailleurs, la jupe extérieure 35 porte au moins un picot 40 qui est disposé en appui sur la rampe 38 pour induire un effort de rotation différentiel par passages successifs dudit picot sur lesdits crans lors de la rotation relative de l'applicateur 31 par rapport au support 13.

En particulier, l'effort de rotation différentiel peut être agencé pour empêcher la rotation relative par blocage du picot 40 dans un cran 39 de la rampe 38, notamment durant l'application de produit sur une partie du corps de l'utilisatrice, et ce tout en permettant à ladite utilisatrice de faire tourner l'applicateur 31 autour de son axe en exerçant sur lui un effort suffisamment important pour permettre le déplacement du picot 40 sur la rampe 38. En outre, la rampe 38 peut être agencée afin que le déplacement du picot 40 sur elle génère un bruit caractéristique à chaque passage dudit picot 40 dans un cran 39.

La jupe extérieure 35 comprend au moins une encoche 41 dans laquelle une patte 42 s'étend axialement, ladite patte portant un picot 40 disposé axialement au-dessus du jonc 36. Dans le mode de réalisation représenté, la jupe extérieure 35 comprend deux encoches 41 diamétralement opposées qui comprennent chacune une patte 42 portant un picot 40.

En outre, l'applicateur 31 comprend un canal 43 qui s'étend depuis une base 44 et débouche dans un orifice 32 de distribution formé sur une surface latérale 45 d'application. Par ailleurs, pour mettre en communication l'orifice 32 de distribution avec le conduit 14 de distribution, le socle 34 de montage comprend une jupe intérieure 46 dans laquelle ledit conduit de distribution est monté en rotation, la base 44 étant fixée sur le socle 34 de manière à ce que le conduit 14 de distribution débouche dans le canal 43.

En particulier, l'applicateur 31 est surmoulé sur le socle 34. Ainsi, on peut prévoir de former un applicateur 31 avec un matériau différent, et notamment plus souple, que le matériau du socle 34. En outre, le socle 34 comprend un godet 47 s'étendant au-dessus des jupes 35, 46 et dans lequel l'applicateur 31 est surmoulé, ledit godet comprenant des encoches 47a disposées sur son fond et dans lesquelles une partie du matériau surmoulé s'étend pour former entre les jupes 35, 46 des crochets 48 d'ancrage de l'applicateur 31 dans le socle 34.

Le système comprend en outre un capot 49 destiné à être disposé de manière réversible autour de l'applicateur 31 entre deux utilisations.

Pour parfaire son esthétique, le système comprend un étui 50, dans lequel le flacon 1 est monté en translation lors de l'actionnement de l'organe 2 de prélèvement. Dans le mode de réalisation représenté, l'étui 50 est intégré au support 13 pour entourer le flacon 1, mais il peut aussi être associé audit support en tant que pièce rapportée.

Par ailleurs, le système comprend un bouchon 51 solidaire du fond de l'étui 50, l'extrémité inférieure 1a du flacon étant montée en translation dans ledit bouchon lors de l'actionnement de l'organe 2 de prélèvement.

Pour ce faire, le bouchon 51 comprend une portion plane 52 de laquelle une portion périphérique annulaire 53 s'étend axialement vers le haut, ladite portion périphérique présentant une portée supérieure 53a qui est agencée pour le guidage en translation de l'extrémité inférieure 1a dans ladite portée supérieure avec un jeu périphérique minimal.

Ainsi, le bouchon 51 permet non seulement de masquer le flacon 1, ce qui améliore l'esthétique du système, mais aussi de maintenir droit le flacon 1 et de le guider en translation dans l'étui 50, afin d'éviter tout mouvement latéral intempestif dudit flacon tant au repos que durant l'actionnement de l'organe 2 de prélèvement.

En relation avec les figures 6, on décrit ci-dessous un procédé d'assemblage d'un système de distribution, et notamment les étapes d'assemblage du flacon 1, dans lequel le produit à distribuer a été préalablement conditionné.

Le procédé prévoit en premier lieu de monter le bouchon 51 sur l'extrémité inférieure 1a du flacon 1.

Pour ce faire, la portion périphérique 53 du bouchon 51 présente en outre une portée inférieure 53b de montage sur la face intérieure de laquelle des nervures axiales 54 sont réparties angulairement, lesdites nervures formant entre elles un espace de diamètre sensiblement égal au diamètre extérieur de l'extrémité inférieure 1a.

Ainsi, pour monter le bouchon 51, on dispose l'extrémité inférieure 1a contre la portée inférieure 53b, de sorte que les nervures 54 viennent en contact serrant sur ladite extrémité inférieure pour assurer le maintien dudit bouchon sur ladite extrémité inférieure.

Une fois le bouchon 51 monté sur le flacon 1, le procédé prévoit de coulisser le flacon 1 dans l'étui 50 jusqu'à solidarisation du bouchon 51 sur le fond de l'étui 50. En particulier, la portion périphérique 53 présente un diamètre extérieur sensiblement égal au diamètre intérieur dudit fond, afin que ladite portion périphérique vienne en contact serrant dans le fond de l'étui 50.

En relation avec les figures 6, l'extrémité inférieure 1a munie du bouchon 51 est disposée dans un godet 55 qui est déplacé axialement vers le haut pour permettre le coulissement dudit flacon dans l'étui 50 et la solidarisation dudit bouchon audit étui (figures 6a, 6b).

Le procédé prévoit en outre de coulisser le flacon 1 par rapport au bouchon 51 pour monter ledit flacon sur l'organe 2 de prélèvement, ledit coulissement étant réalisé sur une course agencée pour permettre la translation de l'extrémité inférieure 1a dans ledit bouchon lors de l'actionnement de l'organe 2 de prélèvement.

En relation avec les figures 6b à 6e, on fait coulisser le flacon 1 sur une course égale à la hauteur de la portion de montage 53b et matérialisée par les nervures 54, afin d'être disposée dans la portion de guidage 53a située juste au-dessus de ladite portion de montage. En outre, la portion de guidage 53a présente un diamètre intérieur légèrement supérieur à celui de la portion de montage 53b et agencé pour permettre le guidage en translation du flacon 1 dans l'étui 50 avec un jeu latéral minimal entre l'extrémité inférieure 1a et le bouchon 51.

En outre, le bouchon 51 présente un trou central 56 formé sur sa portion plane 51, le coulissement du flacon 1 par rapport au bouchon 51 étant réalisé en poussant sur l'extrémité inférieure 1a au moyen d'un doigt 57 introduit dans ledit trou central. En relation avec les figures 6, le godet 55 comprend un trou 58 que l'on met en regard du trou central 56 du bouchon 51 lorsque l'on dispose l'extrémité inférieure 1a dans ledit godet, le doigt 57 passant dans les trous 58, 56 pour venir en appui sur ladite extrémité inférieure afin de faire coulisser le flacon 1.

Selon une réalisation, le trou 56 peut être bouché après l'assemblage, par exemple par une étiquette autocollante, pour améliorer l'esthétique du système. En particulier, l'étiquette peut comprendre un motif, par exemple un logo de la marque du produit conditionné dans le flacon 1, ou encore les mentions légales.

## Revendications

1. Système de distribution d'un produit fluide conditionné dans un flacon (1), ledit système comprenant un organe (2) de prélèvement du produit conditionné qui présente un corps solidaire du flacon (1) pour être alimenté en produit et un gicleur (3) surmontant ledit corps, ledit gicleur étant déplaçable réversiblement sur une course axiale respectivement descendante de distribution et ascendante d'aspiration du produit, ledit système comprenant :
- une bague (7) solidaire du flacon (1) et dans laquelle le corps de l'organe (2) est fixé de façon étanche, ladite bague présentant deux bras supérieurs (8) disposés de part et d'autre du gicleur (3) qui est équipé de deux ergots extérieurs (9), lesdits bras présentant chacun un ergot intérieur (10) disposé dans le prolongement axial d'un ergot extérieur (9) pour former entre eux un logement ;
- un support (13) présentant un conduit (14) de distribution du produit, les bras (8) étant montés en translation dans ledit support en mettant le gicleur (3) en communication avec ledit conduit ;
- un bouton poussoir (15) d'actionnement de l'organe (2) de prélèvement qui est monté en translation radiale par rapport au support (13), ledit bouton poussoir présentant deux pattes (17) disposées respectivement dans un logement formé entre les ergots (9, 10), lesdites pattes présentant chacune une portée supérieure (17a) en appui sur un ergot intérieur (10) et une portée inférieure (17b) en appui sur un ergot extérieur (9), lesdites portées étant divergentes radialement pour qu'un enfoncement du bouton poussoir (15) induise un écartement des ergots (9, 10) pour actionner l'organe (2) de prélèvement par enfoncement du gicleur (3) et soulèvement du flacon (1) ;
ledit système étant **caractérisé en ce qu'**il présente un applicateur (31) du produit qui est monté sur le support (13), ledit montage étant agencé pour permettre la rotation relative dudit applicateur par rapport audit support en mettant en communication étanche un orifice (32) de distribution de l'applicateur (31) avec le conduit (14) de distribution.

2. Système de distribution selon la revendication 1, **caractérisé en ce que** l'axe de rotation de l'applicateur (31) est perpendiculaire à l'axe de translation du bouton poussoir (15).

3. Système de distribution selon l'une des revendications 1 ou 2, **caractérisé en ce que** le support (13) comprend une ouverture latérale (16) dans laquelle le bouton poussoir (15) est monté en translation, ainsi qu'une ouverture supérieure (33) dans laquelle l'applicateur (31) est monté en rotation.

4. Système de distribution selon l'une quelconque des revendications 1 à 3, **caractérisé en ce que** l'applicateur (31) comprend un socle (34) de montage en rotation sur le support (13), le socle (34) comprenant une jupe extérieure (35) portant un jonc annulaire (36) inférieur qui est encliqueté avec possibilité de rotation relative sous un rebord annulaire (37) du support (13).

5. Système de distribution selon la revendication 4, **caractérisé en ce que** le support (13) comprend une rampe annulaire (38) axiale formée au-dessus du rebord d'encliquetage (37) et présentant des crans (39) répartis angulairement, au moins un picot (40) porté par la jupe extérieure (35) étant disposé en appui sur la rampe (38) pour induire un effort de rotation différentiel par passages successifs dudit picot sur lesdits crans lors de la rotation relative de l'applicateur (31) par rapport au support (13).

6. Système de distribution selon la revendication 5, **caractérisé en ce que** la jupe extérieure (35) comprend au moins une encoche (41) dans laquelle une patte (42) s'étend axialement, ladite patte portant un picot (40) disposé axialement au-dessus du jonc (36).

7. Système de distribution selon l'une quelconque des revendications 4 à 6, **caractérisé en ce que** le socle (34) comprend une jupe intérieure (46) dans laquelle le conduit (14) de distribution est monté en rotation.

8. Système de distribution selon l'une quelconque des revendications 1 à 7, **caractérisé en ce que** l'applicateur (31) est surmoulé sur le socle (34).

9. Système de distribution selon l'une quelconque des revendications 1 à 8, **caractérisé en ce que** le gicleur (3) est équipé d'un embout (11) rapporté sur lequel les ergots extérieurs (9) sont formés, ledit embout étant monté en translation dans le conduit (14) de distribution.

10. Système de distribution selon l'une quelconque des revendications 1 à 9, **caractérisé en ce que** le support (13) comprend un insert (21) fixé à l'intérieur dudit support, ledit insert présentant le conduit (14) de distribution.

11. Système de distribution selon l'une quelconque des revendications 1 à 10, **caractérisé en ce qu'**il comprend un étui (50) dans lequel le flacon (1) est monté en translation lors de l'actionnement de l'organe (2) de prélèvement.

12. Système de distribution selon la revendication 11, **caractérisé en ce que** l'étui (50) est associé ou intégré au support (13) pour entourer le flacon (1).

13. Système de distribution selon l'une des revendications 11 ou 12, **caractérisé en ce qu'**il comprend un bouchon (51) solidaire du fond de l'étui (50), l'extrémité inférieure (1a) du flacon (1) étant montée en translation dans ledit bouchon lors de l'actionnement de l'organe (2) de prélèvement.

14. Système de distribution selon la revendication 13, **caractérisé en ce que** le bouchon (51) présente un trou central (56).

15. Procédé d'assemblage d'un système de distribution selon la revendication 13 ou 14, ledit procédé prévoyant de :
- monter le bouchon (51) sur l'extrémité inférieure (1a) du flacon (1) ;
- coulisser le flacon (1) dans l'étui (50) jusqu'à solidarisation du bouchon (51) sur le fond de l'étui (50) ;
- coulisser le flacon (1) par rapport au bouchon (51) pour monter ledit flacon sur l'organe (2) de prélèvement, ledit coulissement étant réalisé sur une course agencée pour permettre la translation de l'extrémité inférieure (1a) dans ledit bouchon lors de l'actionnement de l'organe (2) de prélèvement.

16. Procédé d'assemblage selon la revendication 15 quand elle dépend de la revendication 14, **caractérisé en ce que** le coulissement du flacon (1) par rapport au bouchon (51) est réalisé en poussant sur l'extrémité inférieure (1a) au moyen d'un doigt (57) introduit dans le trou central (56) du bouchon (51).
